# EUROPEAN PATENT APPLICATION

(11) **EP 2 154 038 A1**
(43) Date of publication of application: **17.02.2010**
(21) Application number: 08750385.0
(22) Date of filing: 13.03.2008
(51) Int. Cl.: B60S 3/00, B60S 5/00

(54) **MODULAR SYSTEM FOR CLEANING VEHICLES**

(30) Priority: 29.05.2007 ES 200701471
(71) Applicant: Moviboxes Spain, S.l., Granada (ES)
(72) Inventor: FERNÁNDEZ MARÍN, José Luis, Granada (ES); VÁZQUEZ ACERO, Idelfonso, Granada (ES)
(74) Representative: Carvajal y Urquijo, Isabel
(86) International application number: PCT/ES2008/000142
(87) International publication number: WO 2008/145775

(57) **Abstract**

Vehicle cleansing modular system comprising at least:
a structure 1, lying on the floor on anchoring and support means 17 and formed
by and based on a plurality of profiles, delimiting a plurality of work areas;
and wherein the first work area 11 comprises, in turn,
a filtering flooring 15;
means for treating and reusing wastewater 2;
vehicle washing means.

Where this invention solves the problems of vehicle washing, both on open areas and car parks, either indoor or outdoor ones, public or private, where conditioning civil works and/or waste water discharge are not allowed.

## Description

### Object of the invention

The object of the present invention consists of a cleaning modular system which is easily mounted and dismounted, and which, once mounted, enables to clean the interior and exterior of a vehicle inside said washing system. Likewise, the vehicle cleaning modular system is optionally fit out to include vehicle refueling means.

The object of this invention is to solve the problems of vehicle washing, both in open spaces and car parks, be them indoor or outdoor, private or public ones, where no conditioning civil works and/or waste water discharge are allowed.

### Background of the invention

In the current state of the art, there are known vehicle washing and cleaning systems based on portal frames and on the use of rolls based on brushes. There exist a great number of manufacturers and patent literature on the subject, among which we can mention EP 1034994 or EP 124272. All these systems are based on a mobile element, which can be either the portal frame, or the vehicle moving through a mobile platform moved by chain.

In all these cases, civil works are necessary to condition the washing site for the installation of the water supply and drainage, power, etc. Likewise, and depending on the system used, conditioning of the car park, petrol station or space where the installation is required becomes mandatory.

Washing systems which do not require any civil engineering work are disclosed in the Spanish patent ES2246645, which consist of a trailer-type vehicle fitted out for housing in its interior the vehicle to be cleaned.

### Description of the invention

In order to solve the aforementioned problems, the vehicle cleaning modular system, object of the present invention, is disclosed.

The present invention consists of a modular washing system, the main characteristic of which is its portability, including its easiness for mounting and dismounting; and wherein, once mounted, it enables to clean the interior and exterior of a vehicle inside said washing system.

The vehicle cleaning modular system comprises, at least:
- Demountable side panels, of several measurements which adapt to some profiles, which are fastened to the floor by anchoring means.
- Ceiling which is formed by demountable panels, which rest on the side profiles, and where the lighting means are located.
- Demountable flooring with catch basin, and double bottom to collect water for its later purification.
- Exterior door with lock to prevent access, when the activity is not being carried out.

Once mounted, they are integrated to the following elements:
- Cleaning equipment for the inside and outside of the vehicle.
- Water treatment and purification equipment.

Where the water used for washing the vehicle travels to the catch basin under the floor and from there to the water treatment equipment, where it is treated for its later reuse in the cleaning equipment, forming a closed circuit with no discharge of waste water.

Optionally, it has refueling means so that both cleaning and refueling is possible in the same facility.

The equipment is electrically fed, either by means of a power generator or by power supply from the network.

This invention solves vehicle washing problems, both in open spaces and inside indoor car parks, either private or public ones, where no conditioning civil works or waste water discharge are allowed.

The advantages of the vehicle cleaning modular system, object of the present invention, essentially consist of:
- Portability
- Easiness of transport
- Easiness of mounting and dismounting regardless of the location
- Lack of installation and/or conditioning civil works.
- Autonomy regarding the facility.
- Environmental sustainability, due to the absence of waste water discharge.
- Compliance with the regulations on waste water discharge in cleaning facilities.

### Brief description of the drawings

There follows a brief description of a series of drawings which will help understand the invention better, clearly relating to an embodiment of said invention, which is presented as a non-limiting example thereof.

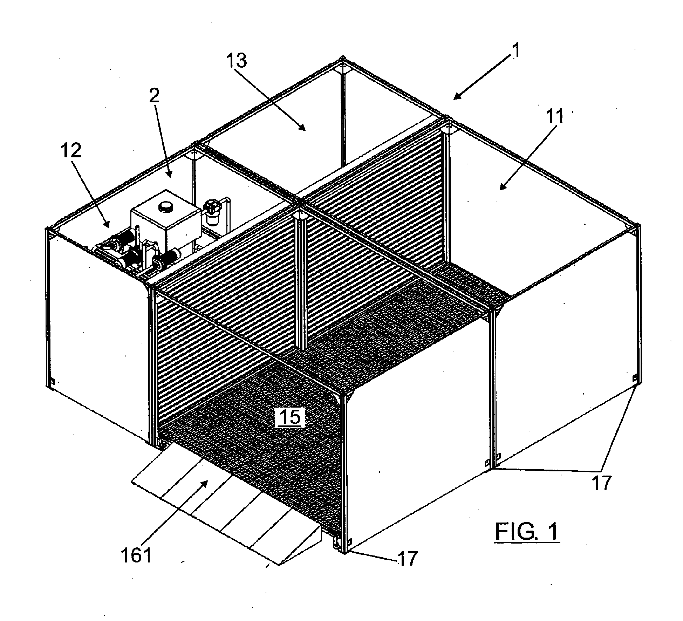

- Figure 1 is a partial perspective view of the vehicle cleaning modular system.

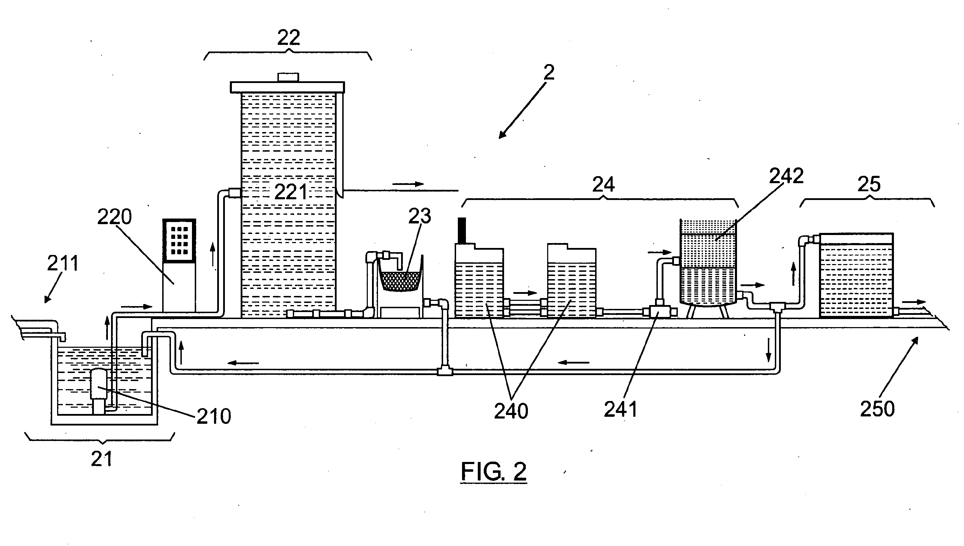

- Figure 2 is a schematic view of the water treatment means built in the vehicle cleaning modular system.

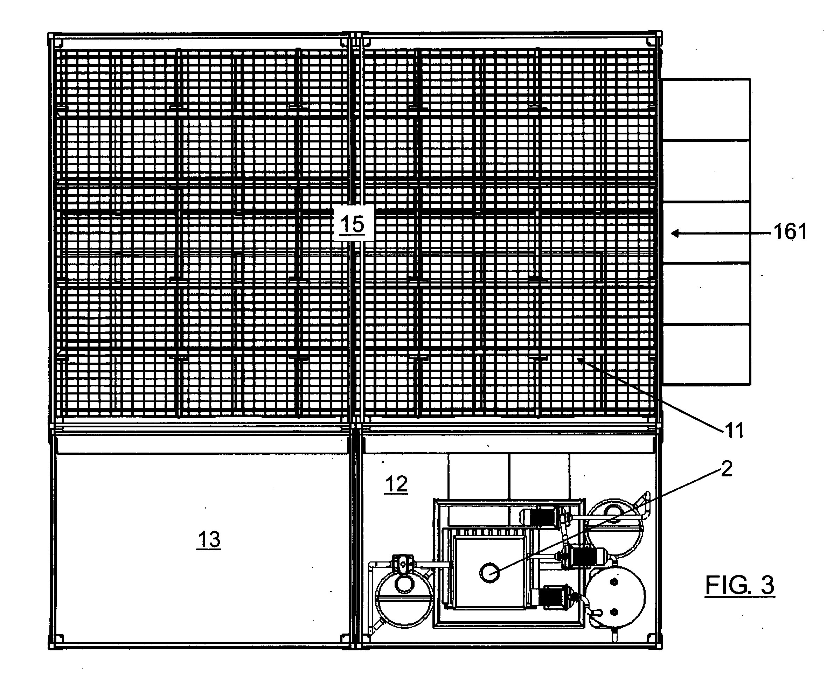

- Figure 3 is a partial plan view of the vehicle cleaning modular system.
- Figure 4 is a view of the flooring of the vehicle cleaning modular system, where figure 4a is a perspective view and figure 4b is a front view.

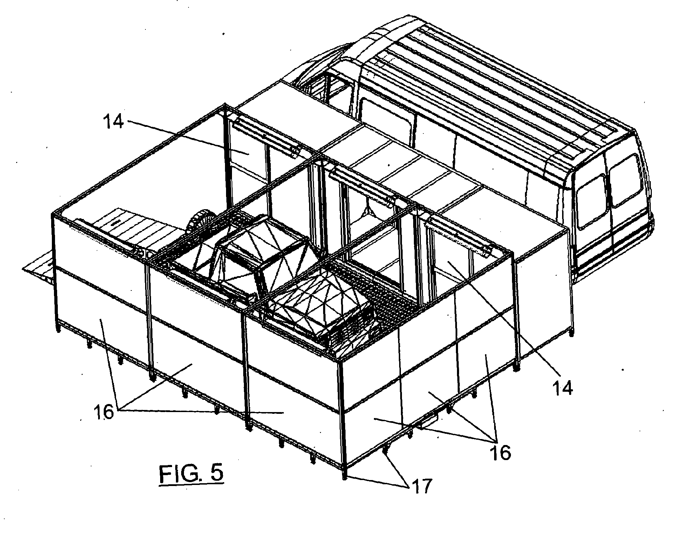

- Figure 5 is a view of the vehicle cleaning modular system, with the complete facility.

### Preferred embodiment of the invention

As it can be seen in the attached drawings, the vehicle cleaning modular system, object of the present invention, comprises, at least:
a structure 1, lying on the floor on anchoring and supporting means 17 and
formed by and based on a plurality of profiles, delimiting a plurality of work areas;
and where the first work area 11 comprises, in turn,
a filtering flooring 15;
means for treating and wastewater reuse 2;
vehicle cleaning means.

The means for treating and wastewater reuse 2, located in the second work area 12 comprise, at least:
means for the collection of waste water 21, comprising,
   at least one impulse pump 210;
   an inlet of waste water 211;
means for primary treatment of water 22, comprising:
   reactive dosing means 220;
   at least one reactor of chemical precipitation 221;
means for treatment of sludge 23;
means for secondary treatment of water 24, comprising:
   a plurality of deposits 240;
   at least one impulse pump 241;
   conditioning means 242;
at least one deposit of treated water 25, comprising:
   a outlet of treated water 250;
   where the inlet of waste water 211 and the outlet of treated water 250 are connected to the filtering flooring 15 of the first work area 11, forming a closed circuit.

The structure 1 is enclosed by a plurality of enclosure panels 16, except for an inlet area 161 to access the first work area 11, being the work areas 11, 12, 13 separated by a plurality of panels 14.

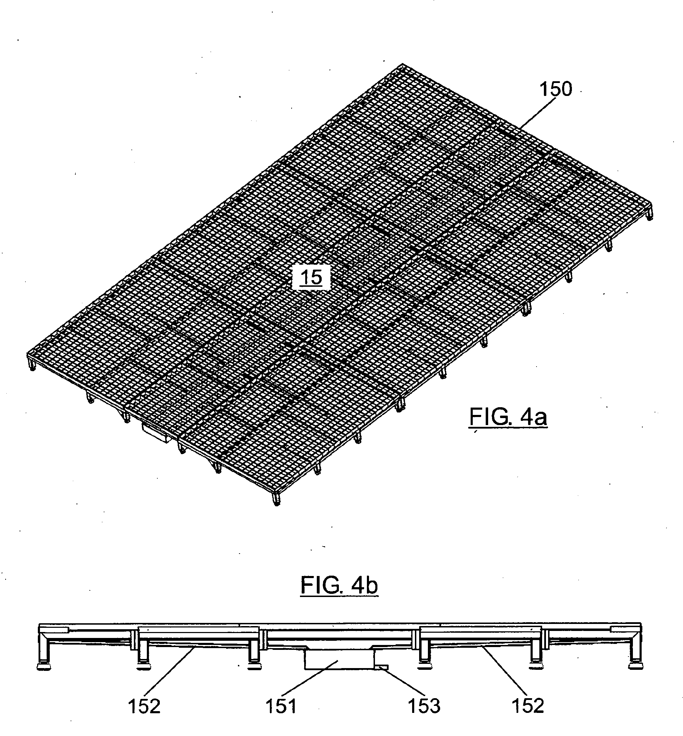

Figure 4 shows in detail the filtering flooring 15, comprising, at least:
a grid-like filtering flooring 150;
a catch basin 151;
a plurality of panels 152;
a plurality of ducts 153;
and where said panels 152 form a slope inclined towards said catch basin 151 to facilitate the collection of water in said catch basin 151 and for the water to travel from there to the ducts 153, which are connected to the water treatment and wastewater reuse system 2, as it was indicated before.

The vehicle cleaning means object of the present invention comprise, at least:
means for cleaning the vehicle interior; in turn comprising,
   vacuuming means;
means for cleaning the vehicle exterior; in turn comprising,
   at least one pressure water spray gun.

In an embodiment of the present invention there are vehicle refueling means 30, located in a third work area 13 which in other embodiments of the invention is fitted as a storage tank.

Finally, the shape and materials of the invention can vary, as long as said modifications do not affect the claims stated below.

## Claims

1. Vehicle cleaning modular system, **characterized in that** it comprises at least:
a structure 1, formed by and based on a plurality of profiles, delimiting a plurality of work areas;
and where the first work area 11 comprises, in turn,
a filtering flooring 15;
means for treating and reusing wastewater 2 comprising, at least:
means for the collection of waste water 21;
means for primary treatment of water 22;
means for treatment of sludge 23;
means for secondary treatment of water 24; and
a deposit of treated water 25;
and vehicle washing means.

2. Vehicle cleaning modular system according to claim 1, **characterized in that** the means for treating and reusing wastewater 2 comprise, at least:
means for the collection of waste water 21, comprising:
at least one impulse pump 210;
an inlet of waste water 211;
means for primary treatment of water 22, comprising:
reactive dosing means 220;
at least one reactor of chemical precipitation 221;
means for treatment of sludge 23;
means for secondary treatment of water 24, comprising:
a plurality of deposits 240;
at least one impulse pump 241;
conditioning means 242;
at least one deposit of treated water 25, comprising:
an outlet of treated water 250;
wherein the inlet of waste water 211 and the outlet of treated water 250 are connected to the filtering flooring 15 of the first work area 11, forming a closed circuit.

3. Vehicle cleaning modular system according to claims 1 and 2, **characterized in that** the means for treating and reusing wastewater 2 are comprised in a second work area 12.

4. Vehicle cleaning modular system according to claim 1, **characterized in that** the structure 1 is enclosed by a plurality of enclosure panels 16, except for an inlet area 161 to access the first work area 11.

5. Vehicle cleaning modular system according to claim 1, **characterized in that** the work areas 11, 12, 13 are separated by a plurality of panels 14.

6. Vehicle cleaning modular system according to claim 1, **characterized in that** the filtering flooring 15 comprises, at least:
a grid-like filtering flooring 150;
a catch basin 151;
a plurality of panels 152;
a plurality of ducts 153;
wherein said panels 152 form a slope inclined towards said catch basin 151 to facilitate the collection of water in said catch basin 151 and for the water to travel from there to the ducts 153, which are connected to the water treatment and wastewater reuse system 2.

7. Vehicle cleansing modular system according to claim 1, **characterized in that** the vehicle cleaning means comprise, at least:
means for washing the vehicle interior; in turn comprising,
vacuuming means;
means for washing the vehicle exterior; in turn comprising,
at least one pressure water spray gun.

8. Vehicle cleaning modular system according to claim 1, **characterized in that** the structure 1 lies on the floor on anchoring and support means.

9. Vehicle cleaning modular system according to claim 1, **characterized in that** it includes vehicle refueling means 30.

10. Vehicle cleaning modular system according to claim 9 **characterized in that** said vehicle refueling means are located in a third work area 13.

11. Vehicle cleaning modular system according to claim 1, **characterized in that** a third work area 13 is a storage tank.
